# DEMANDE DE BREVET EUROPEEN

(11) **EP 4 262 043 A1**
(43) Date de publication de la demande: **18.10.2023**
(21) Numéro de dépôt: 23163292.8
(22) Date de dépôt: 21.03.2023
(51) Int. Cl.: H02J 3/38, G05F 1/67

(54) **DISPOSITIF ÉLÉCTRONIQUE IMPLANTÉ DANS UN GÉNÉRATEUR PHOTOVOLTAÏQUE**

(30) Priorité: 05.04.2022 FR 2203118
(71) Demandeur: ABE-META Systems, 13330 Pelissanne (FR)
(72) Inventeur: DESPRES, Fabrice, 13330 PELISSANNE (FR)
(74) Mandataire: Roman, Alexis

(57) **Abrégé**

L'invention (1) détermine et transmet l'impédance équivalente au point de puissance électrique maximale d'un générateur photovoltaïque constitué d'une ou plusieurs cellules photovoltaïques, d'un ou d'un ensemble de panneaux photovoltaïques (3) grâce à la mesure de la tension (6), du courant (7), et optionnellement de la température (8) de tout ou partie du système photovoltaïque à un convertisseur d'énergie (5) déporté ou intégré au système photovoltaïque, qui règle son impédance interne sur l'impédance équivalente transmise, pour obtenir le maximum d'énergie produite par le générateur photovoltaïque tout en supprimant l'électronique de recherche du point de puissance maximale (MPPT), permettant d'obtenir une meilleure fiabilité, une maintenance moins coûteuse, une mise en sécurité automatique ou par commande et une meilleure productibilité du générateur solaire.

## Description

### Domaine technique.

L'invention concerne un système optimal de conversion électrique de l'énergie photovoltaïque sans recherche empirique du point de puissance maximale par délivrance de l'impédance exacte du générateur photovoltaïque au convertisseur de puissance ainsi simplifié.

L'invention permet de déterminer et transmettre l'impédance équivalente au point de puissance électrique maximale d'un générateur photovoltaïque constitué d'une ou plusieurs cellules photovoltaïques, d'un ou d'un ensemble de panneaux photovoltaïques grâce à la mesure de la tension, du courant, et optionnellement de la température de tout ou partie d'un système photovoltaïque à un convertisseur d'énergie déporté ou intégré au système photovoltaïque, qui règle son impédance interne sur l'impédance équivalente transmise.

### Obiectif(s) de l'invention.

L'objectif de l'invention est d'obtenir le maximum d'énergie produite par le générateur photovoltaïque tout en supprimant l'électronique de recherche du point de puissance maximale (MPPT) généralement utilisée dans les solutions de l'art antérieur, permettant d'obtenir une meilleure fiabilité, une maintenance moins coûteuse, une mise en sécurité automatique ou par commande et une meilleure productibilité du générateur solaire.

### Présentation de l'invention.

La solution proposée par l'invention est un dispositif électronique implanté dans un générateur photovoltaïque constitué de cellules photovoltaïques ou de panneaux solaires, lequel dispositif est réalisé par une partie de composant électronique ou un ou plusieurs composants électroniques, équipés de capteurs de courant, de tension et de température, d'un microcontrôleur, ou autre moyen de calcul, d'interface de transmission de données filaires, radio, d'interrupteurs mécaniques ou électroniques comme des MOSFET, GAFET ou technologie de transistor à effet de champ, ou par une impédance variable, lequel dispositif est configuré pour déterminer après calcul, en prenant en compte l'irradiance et la température des cellules ou des panneaux, l'impédance exacte, notée Z_{TP}, au point de puissance maximale du générateur photovoltaïque, puis transmettre ladite impédance exacte à un, convertisseur d'énergie situé dans chaque panneau ou à l'extérieur des panneaux, afin de générer la plus grande puissance possible des cellules ou des panneaux, vers le convertisseur d'énergie, lequel convertisseur est accordé avec le générateur grâce à cette information Z_{TP}.

Cette solution permet d'atteindre les objectifs précités.

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
Selon un mode de réalisation, le dispositif est agencé derrière ou dans chaque cellule photovoltaïque, ou dans chaque branche de cellules d'un panneau, un par panneau, un pour un ensemble de panneaux, un ou plusieurs par convertisseur d'énergie.
Selon un mode de réalisation, le dispositif est configuré pour mesurer directement la tension en Volt (V) et le courant en Ampères (A) des cellules photovoltaïques ou ensemble de cellules ou panneau ou ensemble de panneaux, et directement ou indirectement la température T_{c} des cellules en degrés (°C) issue de capteurs de température installés soit comme un capteur de température pour l'ensemble d'un panneau, ou un capteur pour une partie de panneau, ou un capteur par cellule d'un panneau, ou d'un capteur de température intégré audit dispositif, ou bien encore, recevoir l'information de température de cellules de toute source extérieure telle que capteur de température déporté, ou caméra thermique, ou par apprentissage via des algorithmes d'intelligence artificielle permettant d'obtenir la température des cellules.
Selon un mode de réalisation, le dispositif implémente un ou plusieurs interrupteurs intégrés, pouvant être mécaniques ou électroniques, pour réaliser un court-circuit ou une boucle ouverte de toute ou partie de panneaux, de chaînes de cellules, ou de cellules.
Selon un mode de réalisation, le dispositif présente plusieurs entrées/sorties mono ou bidirectionnelles qui transmettent :
   - un état de fonctionnement ON/OFF permettant notamment de contrôler l'état dudit dispositif, si ledit dispositif est sous tension, si le panneau est fonctionnel, de forcer un redémarrage dudit dispositif,
   - une alarme adaptée pour signaler un problème tel qu'ombrage ou cellule cassée et mettre le panneau en protection, en cas de surchauffe, de courant ou tension non conformes, de manière automatique ou déportée,
   - l'impédance Z_{TP}.
Selon un mode de réalisation, le dispositif est configuré pour transmettre la valeur d'impédance Z_{TP},en fonction d'au moins une des implémentations suivantes :
   - par une tension, un courant, une impédance, une valeur numérique
   - par une ou plusieurs broches
   - par modulation, radio ou tout autre moyen de communication vers le convertisseur d'énergie,
   - par multiplexage avec d'autres valeurs utiles.
Selon un mode de réalisation, le dispositif est configuré pour déterminer et résoudre, grâce à un algorithme d'intelligence artificielle, le paramètre Z_{TP}(G,T) qui est l'impédance de puissance maximale, quelles que soient la température (T) et l'irradiance (G), l'irradiance étant dérivée de l'information de température, l'impédance Z_{TP}(G,T) résultant des calculs de I_{TP}(G,T), V_{TP}(G,T), I_{D}(G,T), I_{R}(G,T), I_{Rsh}(G,T), Rₛ(G,T), µ_{Vοc}, µ_{Icc}, µ_{Voc} et dont la description est indiquée dans le glossaire indiqué ci-après dans la description.

Un autre aspect de l'invention concerne un système de conversion d'énergie constitué de :
- un convertisseur d'énergie,
- plusieurs dispositifs électroniques conformes à l'une des caratéristiques précédentes, lesquels dispositifs sont mis en série ou en parallèle, chaque dispositif transmettant audit convertisseur la valeur numérique d'une impédance Z_{TP}, et un identifiant unique de chaque dispositif.

Selon un mode de réalisation, la valeur numérique de l'impédance Z_{TP} transmise est complétée par d'autres informations sur le panneau, dont la liste minimale est un numéro de série, un degré de salissure, des évolutions de paramètres internes du panneau dont les valeurs permettent d'effectuer une maintenance et surveillance par algorithme informatique de suivi d'installations solaires.

Selon un mode de réalisation, à la réception de l'information d'impédance Z_{TP}, le convertisseur d'énergie est configuré pour ajuster sa propre impédance équivalente à la valeur Z_{TP}, reçue d'un ou plusieurs dispositifs électroniques pour permettre la conversion optimale d'énergie entre un panneau solaire, une chaîne de cellules photovoltaïques ou une cellule et le convertisseur d'énergie par le principe d'adaptation d'impédance.

Selon un mode de réalisation, chacun des dispositifs électroniques nommés (1)(i), où (i) est un indice unique de chaque dispositif dans le système, est configuré pour transmettre son impédance Z_{TP,i}, de manière à :
- déterminer l'impédance équivalente exacte du système Z_{TP,systeme} par résolution des lois de Kirchhoff, c'est-à-dire:
   -- si les différents dispositifs sont en série, l'impédance équivalente du système Z_{TP,systeme} est égale à la somme des différentes impédances Z_{TP,i}, c'est-à-dire Z_{TP,systeme} = SOMME(Z_{TP,i}),
   -- si les dispositifs sont en parallèle alors (1/Z_{TP,systeme}) = 1/(SOMME (Z_{TP,i})), les combinaisons parallèle-série se résolvant de la même manière.

Selon un mode de réalisation, l'impédance Z_{TP} transmise au convertisseur d'énergie est utilisée dans une boucle de contre-réaction du convertisseur d'énergie pour un réglage de manière exacte du point de puissance, sans mécanisme de suivi de puissance maximale (MPPT), mais avec un réglage sur la vraie puissance ("TP") générée par le système.

Selon un mode de réalisation, l'impédance Z_{TP} est obtenue par résolution de paramètres d'un modèle équivalent de Thévenin/Norton pour une cellule photovoltaïque, une chaîne de cellules photovoltaïques, un panneau photovoltaïque ou un ensemble de panneaux photovoltaïques, qui sont modélisés comme un générateur.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] est le schéma de principe de l'invention, montrant ses entrées et sorties et permettant d'expliciter et numéroter chacun des éléments de l'invention (1).
[Fig. 2] est le schéma équivalent d'une cellule photovoltaïque, ensemble de cellules photovoltaïques, panneau photovoltaïque, ensemble de panneaux photovoltaïques.
[Fig. 3] sont les courbes courant-tension-puissance des cellules, ensemble de cellules, panneaux, ensemble de panneaux, avec tension de court-circuit, courant de court-circuit, point de vraie puissance ("TP"), tension, courant et puissance de vraie puissance.

### Description de modes de réalisation.

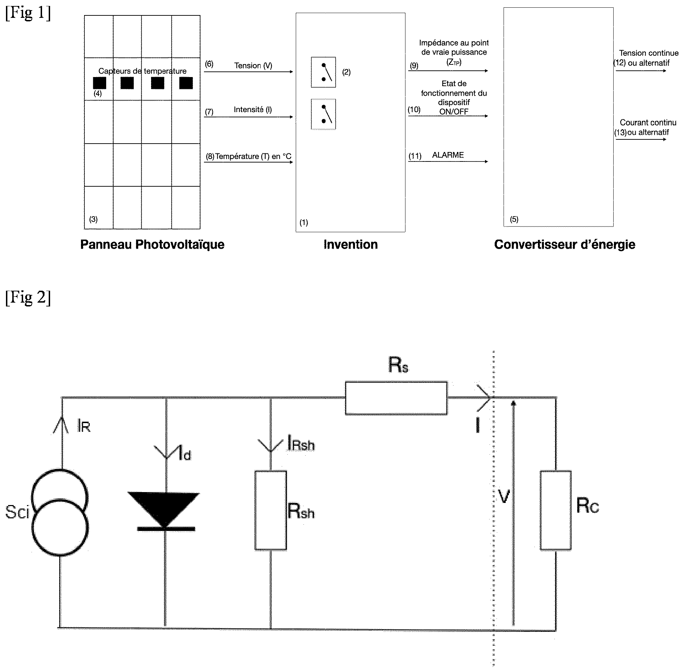

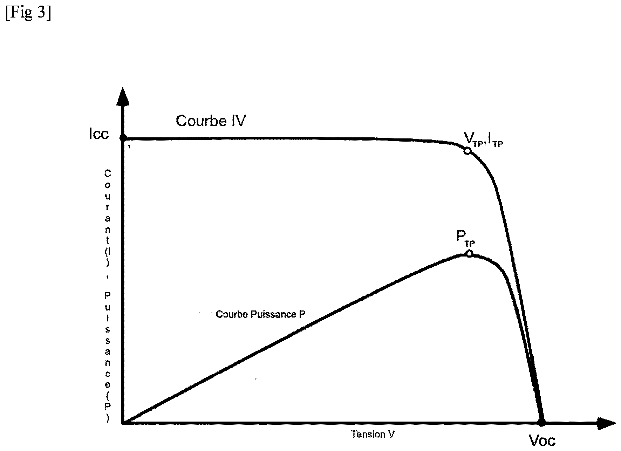

L'invention (1), décrite dans la [Fig. 1] consiste en un dispositif électronique, réalisé par une partie de composant électronique ou un ou plusieurs composants électroniques, permettant de déterminer et transmettre l'impédance exacte (notée Z_{TP} au point de puissance maximale (voir [Fig. 3]) d'un générateur photovoltaïque (3) (cellule photovoltaïque, ensemble de cellules, panneaux, ensemble de panneaux), quelles que soient l'irradiance et la température, au convertisseur d'énergie (5) situé dans le panneau ou à l'extérieur des panneaux photovoltaïques, afin de générer la plus grande puissance possible des cellules, chaînes de cellules, panneaux photovoltaïques et du convertisseur d'énergie, accordé avec la source d'énergie grâce à cette information.

L'invention (1) peut être derrière ou dans chaque cellule photovoltaïque, ou dans chaque branche de cellules d'un panneau, une par panneau, une pour un ensemble de panneaux, une ou plusieurs par convertisseur d'énergie, en fonction de l'intérêt technique ou économique.

L'invention (1) permet de faire la mesure directement de la tension (6) en Volt (V) des cellules photovoltaïques ou ensemble de cellules ou panneau ou ensemble de panneaux, du courant (7) en Ampères (A) des cellules photovoltaïques ou ensemble de cellules ou panneau ou ensemble de panneaux, et directement ou indirectement de la température (8) des cellules Tc en degrés (°C) issue de capteurs de température (4) installés soit comme un capteur de température pour l'ensemble d'un panneau, ou un capteur pour une partie de panneau, ou un capteur par cellule d'un panneau, ou d'un capteur de température intégré à l'invention, ou bien encore, recevoir l'information de température de cellules de toute source extérieure (capteur de température déporté, caméra thermique...) ou par apprentissage via des algorithmes d'intelligence artificielle permettant d'obtenir la température des cellules.

L'invention (1) peut implémenter un ou plusieurs interrupteurs (2) intégrés afin de réaliser un court-circuit ou une boucle ouverte de toute ou partie du panneau, des chaînes de cellules, ou des cellules photovoltaïques.

Par analyse des grandeurs mesurées, l'invention (1) présente plusieurs entrées/sorties mono ou bidirectionnelles dont :
- Un état de fonctionnement ON/OFF (10) qui permet de contrôler et d'obtenir l'état de l'invention (1) (fonctionnelle ou non), si elle est sous tension, si le panneau est fonctionnel, de forcer un redémarrage de l'invention (1) ;
- Une alarme (11) permettant de signaler un problème (ombrage, cellule cassée...), mettre le panneau en protection, en cas de surchauffe, de courant ou tension non conformes, de manière automatique ou déportée ;
- L'impédance au point de vraie puissance Z_{TP} (12), transmettant l'impédance Z_{TP} déterminée par l'invention (1), grâce à la résolution des équations correspondantes au circuit de la [Fig. 2] complétée ou non par une analyse en intelligence artificielle.

La mise à disposition de la valeur de l'impédance peut se faire :
- Via une tension, un courant, une impédance, une valeur numérique
- Par une ou plusieurs broches de l'invention (1)
- Par modulation, radio ou tout autre moyen de communication vers le convertisseur d'énergie.
- Peut être multiplexée avec d'autres valeurs utiles

La transmission de la valeur numérique de l'impédance Z_{TP}, dans le cas de la mise en série de plusieurs inventions (1), se fera suivant un protocole de type réseau permettant d'éviter les collisions et pertes de données et d'identifier de manière unique l'invention (1).

La transmission de la valeur numérique de l'impédance Z_{TP}, pourra être complétée par d'autres informations sur le panneau, comme le numéro de série, le degré de salissure, les évolutions des paramètres internes du panneau comme I_{TP}(G,T), V_{TP}(G,T), I_{D}(G,T), I_{R}(G,T), I_{RSH}(G,T), R_{S}(G,T), R_{SH}(G,T),µ_{Voc}, µ_{Icc}, valeurs décrites plus bas dans glossaire, ces valeurs permettant d'effectuer une maintenance et surveillance des installations solaires à bas cout, par algorithme informatique de suivi des installations.

A la réception de l'information d'impédance Z_{TP}, le convertisseur d'énergie (5) ajustera sa propre impédance équivalente à la valeur Z_{TP} pour permettre la conversion optimale d'énergie entre le panneau solaire, la chaîne de cellules photovoltaïques ou la cellule et le convertisseur d'énergie par le principe d'adaptation d'impédance.

Dans le cas où plusieurs inventions (1) sont connectées à un convertisseur d'énergie (5), chacune des inventions (1), nommées (1)(i), où (i) est l'indice unique de chaque invention (1) dans le système, peut transmettre son impédance équivalente Z_{TP,i}, ce qui permet :
- De déterminer l'impédance équivalente exacte du système par résolution des lois de Kirchhoff, c'est-à-dire :
   i. si les différentes inventions (1) sont en série, l'impédance équivalente du système Z_{TP,systeme} sera égale à la somme des différentes impédances, c'est-à-dire Z_{TP,systeme} = SOMME (Z_{TP,i}),
   ii. si les inventions (1) sont en parallèle alors (1/Z_{TP,systeme}) = 1/(SOMME(Z_{TP,i})) ,
   iii. les combinaisons parallèle-série pouvant se résoudre de la même manière.

Les informations Z_{TP} et/ou Z_{TP,i} et/ou Z_{TP,systeme} permettent aussi de connaître l'état individuel des panneaux, leur éventuel ombrage, salissures, problèmes techniques, non appariement et donc faciliter les opérations de maintenance et d'amélioration du système.

Cette adaptation d'impédance Z_{TP}, Z_{TP,i} ou Z_{TP,systeme} si plusieurs inventions (1) sont connectées au convertisseur d'énergie (5), sans recherche du point d'impédance, implémentée dans le convertisseur d'énergie (5) permet une simplification de l'étage d'entrée du convertisseur abaissant le coût du convertisseur.

L'impédance Z_{TP} transmise au convertisseur d'énergie peut être utilisée dans la boucle de contre-réaction du convertisseur d'énergie pour un réglage de manière exacte du point de puissance, sans le surcoût spécifique du suivi de MPPT (Suivi du Point de Puissance Maximale) jusqu'alors utilisé dans l'industrie photovoltaïque, dans les onduleurs, chargeurs, convertisseur continu-continu, continu-alternatif ou autres. On n'a donc plus un mécanisme de suivi de puissance maximale (MPPT), mécanisme empirique et imparfait, mais un réglage sur la vraie puissance ("TP") générée par le système.

L'impédance Z_{TP} est obtenue par résolution des paramètres du modèle équivalent de Thévenin/Norton pour une cellule photovoltaïque, une chaîne de cellules photovoltaïques, un panneau photovoltaïque ou un ensemble de panneaux photovoltaïques, qui sont modélisés comme un générateur donné en [Fig. 2]

L'innovation (1) détermine et résout les paramètres Z_{TP}(G,T) qui est l'impédance de vraie puissance notée "TP", quelles que soient la température (T) et l'irradiance (G), l'irradiance étant dérivée de l'information de température des cellules. L'impédance Z_{TP}(G,T) résulte des calculs de I_{TP}(G,T), V_{TP}(G,T), I_{D}(G,T), I_{R}(G,T), I_{Rsh}(G,T), Rₛ(G,T), µ_{Vοc}, µ_{Icc}, en fonction de la température des cellules et l'irradiance, qui est dérivée de la température. µ_{Voc} étant le coefficient d'évolution de la tension en boucle ouverte V_{oc} en fonction de la température (en %/°C), et µ_{Icc}, le coefficient d'évolution du courant de court-circuit I_{cc} en fonction de la température (en %/°C).

### GLOSSAIRE :

| Symbole | Description |
|---|---|
| I_{TP}(G,T) | Courant, au point de puissance maximale, du générateur photovoltaïque en fonction de l'irradiance (G) et de la température (T) dudit générateur |
| V_{TP}(G,T) | Tension, au point de puissance maximale, en sortie du générateur photovoltaïque en fonction de l'irradiance (G) et de la température (T) dudit générateur |
| I_{D}(G,T) | Courant dans la diode de fuite équivalente du générateur photovoltaïque en fonction de l'irradiance (G) et de la température (T) dudit générateur |
| I_{R}(G,T) | Courant de la source de courant idéale photovoltaïque Sci du générateur photovoltaïque en fonction de l'irradiance (G) et de la température (T) dudit générateur |
| I_{Rsh}(G,T) | Courant dans la résistance shunt équivalente du générateur photovoltaïque en fonction de l'irradiance (G) et de la température (T) dudit générateur |
| Rₛ(G,T) | Résistance série équivalente du générateur photovoltaïque en fonction de l'irradiance (G) et de la température (T) dudit générateur |
| µ_{Voc} | Coefficient d'évolution de la tension en boucle ouverte Voc en fonction de la température (en %/°C), du générateur photovoltaïque |
| µ_{Icc} | Coefficient d'évolution du courant de court-circuit Icc en fonction de la température (en %/°C) du générateur photovoltaïque |

## Revendications

1. Dispositif électronique (1) implanté dans un générateur photovoltaïque constitué de cellules photovoltaïques ou de panneaux solaires, lequel dispositif est réalisé par une partie de composant électronique ou un ou plusieurs composants électroniques, équipés de capteurs de courant, de tension et de température, d'un microcontrôleur, ou autre moyen de calcul, d'interface de transmission de données filaires, radio, d'interrupteurs mécaniques ou électroniques comme des MOSFET, GAFET ou technologie de transistor à effet de champ, ou par une impédance variable, lequel dispositif est configuré pour déterminer après calcul, en prenant en compte l'irradiance et la température des cellules ou des panneaux, l'impédance exacte, notée Z_{IP}, au point de puissance maximale du générateur photovoltaïque, puis transmettre ladite impédance exacte à un, convertisseur d'énergie (5) situé dans chaque panneau ou à l'extérieur des panneaux, afin de générer la plus grande puissance possible des cellules ou des panneaux, vers le convertisseur d'énergie, lequel convertisseur est accordé avec le générateur grâce à cette information Z_{TP}.

2. Dispositif selon la revendication 1, **caractérisé en ce qu'**il est agencé derrière ou dans chaque cellule photovoltaïque, ou dans chaque branche de cellules d'un panneau, un par panneau, un pour un ensemble de panneaux, un ou plusieurs par convertisseur d'énergie.

3. Dispositif selon l'une des revendications précédentes, **caractérisé en ce qu'**il est configuré pour mesurer directement la tension (6) en Volt (V) et le courant (7) en Ampères (A) des cellules photovoltaïques ou ensemble de cellules ou panneau ou ensemble de panneaux, et directement ou indirectement la température T_{c} (8) des cellules en degrés (°C) issue de capteurs de température (4) installés soit comme un capteur de température pour l'ensemble d'un panneau, ou un capteur pour une partie de panneau, ou un capteur par cellule d'un panneau, ou d'un capteur de température intégré audit dispositif, ou bien encore, recevoir l'information de température de cellules de toute source extérieure telle que capteur de température déporté, ou caméra thermique, ou par apprentissage via des algorithmes d'intelligence artificielle permettant d'obtenir la température des cellules.

4. Dispositif selon l'une des revendications précédentes, **caractérisé en ce qu'**il implémente un ou plusieurs interrupteurs (2) intégrés, pouvant être mécaniques ou électroniques, pour réaliser un court-circuit ou une boucle ouverte de toute ou partie de panneaux, de chaînes de cellules, ou de cellules.

5. Dispositif selon l'une des revendications précédentes, **caractérisé en ce qu'**il présente plusieurs entrées/sorties mono ou bidirectionnelles qui transmettent :
- un état de fonctionnement ON/OFF (10) permettant notamment de contrôler l'état dudit dispositif (1), si ledit dispositif est sous tension, si le panneau est fonctionnel, de forcer un redémarrage dudit dispositif,
- une alarme (11) adaptée pour signaler un problème tel qu'ombrage ou cellule cassée et mettre le panneau en protection, en cas de surchauffe, de courant ou tension non conformes, de manière automatique ou déportée,
- l'impédance Z_{TP} (12).

6. Dispositif selon l'une des revendications précédentes, **caractérisé en ce qu'**il est configuré pour transmettre la valeur d'impédance Z_{TP}, en fonction d'au moins une des implémentations suivantes :
- par une tension, un courant, une impédance, une valeur numérique
- par une ou plusieurs broches
- par modulation, radio ou tout autre moyen de communication vers le convertisseur d'énergie,
- par multiplexage avec d'autres valeurs utiles.

7. Dispositif selon l'une des revendications précédentes, **caractérisé en ce qu'**il détermine et résout le paramètre Z_{TP}(G,T) qui est l'impédance de puissance maximale, quelles que soient la température (T) et l'irradiance (G), l'irradiance étant dérivée de l'information de température, l'impédance Z_{TP}(G,T) résultant des calculs de I_{TP}(G,T), V_{TP}(G,T), I_{D}(G,T), I_{R}(G,T), I_{Rsh}(G,T), Rₛ(G,T), µ_{Voc}, µ_{Icc}, Où :
• I_{TP}(G,T) est le courant, au point de puissance maximale, du générateur photovoltaïque en fonction de l'irradiance (G) et de la température (T) dudit générateur ;
• V_{TP}(G,T) est la tension, au point de puissance maximale, en sortie du générateur photovoltaïque en fonction de l'irradiance (G) et de la température (T) dudit générateur ;
• I_{D}(G,T) est le courant dans une diode de fuite équivalente du générateur photovoltaïque en fonction de l'irradiance (G) et de la température (T) dudit générateur ;
• I_{R}(G,T) est le courant de une source de courant idéale photovoltaïque (Sci) du générateur photovoltaïque en fonction de l'irradiance (G) et de la température (T) dudit générateur ;
• I_{Rsh}(G,T) est le courant dans une résistance shunt équivalente du générateur photovoltaïque en fonction de l'irradiance (G) et de la température (T) dudit générateur ;
• Rₛ(G,T) est une résistance série équivalente du générateur photovoltaïque en fonction de l'irradiance (G) et de la température (T) dudit générateur ;
• µ_{Voc} étant un coefficient d'évolution d'une tension en boucle ouverte Voc en fonction de la température (en %/°C), et µ_{Icc}, un coefficient d'évolution d'un courant de court-circuit Icc en fonction de la température (en %/°C).

8. Système de conversion d'énergie constitué de :
- un convertisseur d'énergie (5),
- plusieurs dispositifs électroniques (1) conformes à l'une des revendications précédentes, lesquels dispositifs sont mis en série ou en parallèle, chaque dispositif transmettant audit convertisseur la valeur numérique d'une impédance Z_{TP}, et un identifiant unique de chaque dispositif.

9. Système selon la revendication 8, dans lequel la valeur numérique de l'impédance Z_{TP} transmise est complétée par d'autres informations sur le panneau, dont la liste minimale est un numéro de série, un degré de salissure, des évolutions de paramètres internes du panneau dont les valeurs permettent d'effectuer une maintenance et surveillance par algorithme informatique de suivi d'installations solaires.

10. Système selon l'une des revendications 8 ou 9, dans lequel à la réception de l'information d'impédance Z_{TP}, le convertisseur d'énergie (5) est configuré pour ajuster sa propre impédance équivalente à la valeur Z_{TP}, reçue d'un ou plusieurs dispositifs électroniques (1) pour permettre la conversion optimale d'énergie entre un panneau solaire, une chaîne de cellules photovoltaïques ou une cellule et le convertisseur d'énergie par le principe d'adaptation d'impédance.

11. Système selon l'une des revendications 8 à 10, dans lequel chacun des dispositifs électroniques nommés (1)(i), où (i) est un indice unique de chaque dispositif dans le système, est configuré pour transmettre son impédance Z_{TR,i}, de manière à :
- déterminer l'impédance équivalente exacte du système Z_{TP,systeme} par résolution des lois de Kirchhoff, c'est-à-dire:
-- si les différents dispositifs sont en série, l'impédance équivalente du système Z_{TP,systeme} est égale à la somme des différentes impédances Z_{TP,i}, c'est-à-dire Z_{TP,systeme} = SOMME(Z_{TP,i}),
-- si les dispositifs sont en parallèle alors (1/Z_{TP,systeme}) = 1/(SOMME (Z_{TP,i})), les combinaisons parallèle-série se résolvant de la même manière.

12. Système selon l'une des revendications 8 à 11, dans lequel l'impédance Z_{TP} transmise au convertisseur d'énergie est utilisée dans une boucle de contre-réaction du convertisseur d'énergie pour un réglage de manière exacte du point de puissance, sans mécanisme de suivi de puissance maximale (MPPT), mais avec un réglage sur la vraie puissance ("TP") générée par le système.

13. Système selon l'une des revendications 8 à 12, dans lequel l'impédance Z_{TP} est obtenue par résolution de paramètres d'un modèle équivalent de Thévenin/Norton pour une cellule photovoltaïque, une chaîne de cellules photovoltaïques, un panneau photovoltaïque ou un ensemble de panneaux photovoltaïques, qui sont modélisés comme un générateur.
